# EUROPÄISCHE PATENTSCHRIFT

(11) **EP 0 270 624 B1**
(45) Veröffentlichungstag und Bekanntmachung des Hinweises auf die Patenterteilung: **03.02.1993**
(21) Anmeldenummer: 87903873.5
(22) Anmeldetag: 19.06.1987
(51) Int. Cl.: C08L 23/02, C08L 53/02, B65D 53/00

(54) **FORMTEIL**
MOULDING
PIECE MOULEE

(30) Priorität: 20.06.1986 DE 3620690
(43) Veröffentlichungstag der Anmeldung: 15.06.1988
(73) Patentinhaber: DS-Chemie GmbH, D-28219 Bremen (DE)
(72) Erfinder: PEIFER, Horst, H., D-2804 Lilienthal (DE); GRUNDSCHÖTTEL, Dieter, D-2806 Oyten (DE); NÜSSEN, Peter, D-2863 Ritterhude-Ihlpohl (DE)
(74) Vertreter: Maiwald, Walter, Dr. Dipl.-Chem.
(86) Internationale Anmeldenummer: EP8700316
(87) Internationale Veröffentlichungsnummer: WO8707903

(56) Entgegenhaltungen:
- DE-A- 2 729 548
- FR-A- 232 378
- US-A- 3 779 965
- US-A- 4 216 132

## Beschreibung

Die Erfindung betrifft ein Dichtungselement für Gefäßverschlüsse aus einem unter üblichen Verwendungsbedingungen elastisch verformbaren synthetischen Polymercompound, das gegebenenfalls einen Gehalt an Füllstoff aufweist. Als Polymercompound zur Herstellung des erfindungsgemäßen Dichtungselementes für Gefäßverschlüsse wird ein plastisches, insbesondere thermoplastisches, zum Dichtungselement ausformbares, aber unter dessen üblichen Verwendungsbedingungen elastisches Polymercompound verwendet, daß ein synthetisches Polymer, einen Härtemodifikator, sowie gegebenenfalls Schäummittel und/oder Füllstoff bzw. Verarbeitungs-Hilfsmittel enthält.

Gefäßverschlüsse müssen sich dafür eignen, einfach und trotzdem zuverlässig dichtend am Gefäß angebracht zu werden, wobei üblicherweise keine Nachbehandlungen erforderlich sein dürfen und die Abmessungen der Gefäßöffnung sowie deren Erhaltungszustand und Rauheit (beispielsweise bei Pfandflaschen) sehr verschieden sein können. Es ist daher schon seit langem bekannt, Gefäßverschlüsse wie beispielsweise Kronenkorke auf ihrer dem Gefäß zugewandten Innenseite mit einem elastischen Dichtungselement zu versehen, welches bei angebrachtem Verschluß zwischen diesem und dem Gefäß eingepreßt ist und die Dichtigkeit gewährleistet.

Während früher die Einlagen von Kronenkorken bzw. Falschenschraubverschlüssen vorwiegend aus Preßkork hergestellt wurden, welcher gegebenenfalls noch mit einer dünnen Kunststoff- oder Aluminiumfolie beschichtet war, wird seit längerem das Dichtungselement insgesamt aus synthetischem Polymercompound hergestellt. Dafür eignen sich jedoch nur Polymercompounds, die dauerhaft und widerstandsfähig genug sind und dabei gleichzeitig die erforderliche Elastizität aufweisen.

In der Praxis wird dafür hauptsächlich PVC verwendet; auch Polyethylen sowie Gemische dieser Stoffe mit Vinylacetat bzw. Vinylacetat-Ethylen-Copolymeren sind eingesetzt worden.

Die Herstellung von Gefäßverschlüssen unter der Verwendung solcher Polymercompounds ist beispielsweise in der DE-AS 20 33 064 und der DE-OS 30 21 488 beschrieben.

Diese bekannten Polymercompounds haben jedoch noch erhebliche Nachteile. Die Verwendung von PVC oder anderen halogenhaltigen Kunststoffen führt zu immer größer werdenden Schwierigkeiten bei der Beseitigung und Unschädlichmachung der gebrauchten, in den Hausmüll gelangenden Gefäßverschlüsse. Bei der üblichen Verbrennungsbehandlung des Hausmülls entstehen aus Halogen-Kunststoffen säurehaltige Gase, deren Freisetzung in die Umwelt schädlich ist. Auch die für die Einstellung der benötigten Dichtungseigenschaften unerläßliche Zusetzung von niedermolekularen Weichmachern (beispielsweise Phthalaten) ist, aus Gründen der Gesundheitsfürsorge, nicht unbedenklich, da diese Weichmacher zum Teil aus dem PVC wieder freigegeben werden und über im Gefäß enthaltene Nahrungs- bzw. Genußmittel in den menschlichen Körper gelangen können. Aus diesem Grund ist der Weichmacheranteil solcher Polymermaterialien durch entsprechende Vorschrift nach oben begrenzt.

Polyethylen alleine ist als Dichtungsmaterial insbesondere dann ungeeignet, wenn Temperaturschwankungen oder beschädigte Gefäßmündungen zu berücksichtigen sind. Polyethylen ist außerdem für CO₂-haltige Getränke aus Dichtigkeitsgründen nicht geeignet.

Aus der DE-A-27 29 548 ist ein extrudiertes Profil für Fugenabdichtungen bekannt, das neben SBS-Kautschuk und Ethylen-Vinylacetat-Copolymerem sowie einem estergruppenfreien Härtemodifikator 37 Gewichtsteile Ruß auf 100 Gewichtsteile Kautschuk enthält, um bei hoher Kälte- und Wärmebeständigkeit sowie Zug- und Reißfestigkeit die hohe Schweißbarkeit zu gewährleisten, die für die Verarbeitung von Fugendichtungsprofilen erforderlich ist. Dieses Material kann für Flaschen- und Gläserverschlüsse schon aus gesetzlichen Gründen nicht verwendet werden und eignet sich dafür auch nicht.

Aus der US-A-4,216,132 ist ein halogenfreies Polymercompound für Schuhsohlen bekannt. Es enthält neben HD-Polyethylen ein Gemisch linearer und radialer SBS-Blockcopolymerer. Ein Härtemodifikator kann, muß aber nicht, hinzutreten. Dieses Material ist den speziellen Anforderungen angepaßt, die an aus Bahnmaterial ausgeschnittene Schuhsohlen gestellt werden. Für die Herstellung von Gefäßverschlüssen, insbesondere von unmittelbar aus plastifiziertem Compound geformten Teilen eignet es sich nicht.

Zuletzt ist aus der US-A-3,779,965 ein Polymercompound bekannt, daß neben SBS- oder SIS-Kautschuk einen halogenfreien Härtemodifikator und zusätzlich ein Paraffin- oder Polyethylenwachs sowie 2,6-Ditert.-butyl-parakresol enthält. Vorzugsweise enthält das Compound zusätzlich TiO₂. Dieses Compound wird als Bahnmaterial extrudiert, zerkleinert und nochmals als Bahnmaterial extrudiert. Daraufhin werden Dichtungsscheiben für Flaschenverschlüsse aus dem Bahnmaterial ausgeschnitten. Dieses Material erfordert ein sehr aufwendiges Verarbeitungsverfahren, mit zweimaliger Extrusion, einem Zerkleinerungs- und einem Ausschneideschritt, auf den dann noch eine Überführung und Einpassung des Dichtungsteils im Gefäßverschluß folgt.

Aufgabe der Erfingung ist es daher, ein Dichtungselement für Gefäßverschlüsse der aus US-A-3779965 im Prinzip bekannten Art anzugeben, die bei unaufwendiger Herstellung die notwendige Dichtigkeit des Gefäßverschlusses gewährleisten, keine schädlichen Substanzen, insbesondere keine halogenhaltigen Bestandteile und keine niedermolekularen estergruppenhaltigen Weichmacher enthalten und den Beanspruchungsbedingungen üblicher Gefäßverschlüsse, beispielsweise einem Pasteurisiervorgang, standhalten können.

Zur Lösung dieser Aufgabe weist das Dichtungselement der eingangs genannten Art erfindungsgemäß die Merkmale des Patentanspruches 1 auf.

Vorteilhafte Ausgestaltungen sind in den Unteransprüchen definiert.

Das zur Herstellung des erfindungsgemäßen Dichtungselements verwendete Polymercompound läßt sich aus leicht erhältlichen Rohmaterialien herstellen. Es läßt sich mittels der bereits für die Verarbeitung von vergleichbaren PVC-Materialien vorhandenen z. B. von der Firma SACMI, Italien, hergestellten Maschinen verarbeiten. Dabei erweist sich der Zusatz eines Schäummittels als vorteilhaft, welches beim Austritt der Polymermasse aus dem Extruder eine gewisse Strangaufweitung bewirkt, die dem Verhalten von PVC-Massen unter gleichen Bedingungen weitgehend entspricht. Zur Verbesserung des Schneide- und Transportverhaltens des Polymercompounds kann vorteilhaft ein geringer Gehalt an hochdisperser Kieselsäure vorgesehen werden. Das plastifizierte Polymercompound läßt sich ohne Schwierigkeiten extrudieren, schneiden und nachfolgend druckverformen. Es erstarrt dann zu dem gewünschten Dichtungselement.

Dieses aus dem Polymercompound erzeugte, entweder am Gefäßverschluß haftende oder in diesen eingelegte Dichtungselement weist bei guter Formstabilität eine Elastizität auf, die für alle üblichen Einsatzzwecke von Gefäßverschlüssen zur Gewährleistung der Dichtigkeit ausreicht. Die Gefäße sind mit aufgesetztem Verschluß pasteurisierbar, ohne daß das Dichtungselement leidet oder undicht wird.

Da das Polymercompound keine niedermolekularen Weichmacher enthält, ist es lebensmittelrechtlich unbedenklich; wenn es in den Hausmüll gerät, kann es in einer Müllverbrennungsanlage keine schädlichen sauren Gase freisetzen, da es halogenfrei ist.

Die mit dem erfindungsgemäßen Dichtungselement ausgestatteten Gefäßverschlüsse entsprechen den Vorschriften, wie sie beispielsweise in der DIN-Norm 6099 für Kronenkorke festgelegt sind.

Es versteht sich, daß das bevorzugte Polymercompound auf die jeweils gegebenen Anforderungen verschiedener Einsatzzwecke dadurch eingerichtet werden kann, daß seine Zusammensetzung entsprechend gewählt wird. So läßt sich die Elastizität über den Gesamtanteil an Zusatzstoffen beeinflussen, die die Ausgangshärte des verwendeten SBS modifizieren. Auch der Anteil an Schäummittel und der Grad der dadurch bewirkten Aufschäumung gestattet eine Anpassung der Materialeigenschaften.

Die Verwendung des oben beschriebenen Polymercompounds hat den weiteren Vorteil, daß die erzeugten Dichtungselemente leichter sein können als die bekannten beispielsweise aus PVC. Mit dem bevorzugten Polymercompound lassen sich daher z. B. Inneneinlagen für Kronenkorke erzeugen, die nur etwa 150 bis 160 mg wiegen; dies bedeutet eine nicht unerhebliche Materialeinsparung gegenüber bekannten Inneneinlagen aus PVC.

Insbesondere für mechanisch dichtende Flaschen- und Gefäßverschlüsse aus Metall bzw. Kunststoff wie etwa Kronenkorke und Schraubkappen ist es erforderlich, daß das die Einlage bildende Dichtungselement fest und vollflächig am Verschluß haftet. Anderenfalls kann es bei beschädigten Gefäßmündungen zum Verschieben oder Verdrehen der Einlage und dadurch zu Undichtigkeiten kommen. Bei schlechter Haftung der Einlage kommt es außerdem durch lokale Ablösungen zu feuchtigkeitsgefüllten Blasen, die die Korrosion metallener Verschlüsse begünstigen. Diese nachteiligen Effekte werden durch den PE- bzw. EVA-Gehalt des Compounds wirksam unterdrückt.

Die Verwendung von PE- und/oder EVA-haltigen Compounds hat den Vorteil, daß Gehalte an aromatischen Polymeren im Compound verringert bzw. ganz vermieden werden. Styrolderivate, die gelegentlich in ähnlichen Compounds enthalten sind, können Geruch und Geschmack des verpackten Produktes nachteilig beeinflussen.

Eine geringere Konzentration aromatischer Polymere erhöht die Verarbeitungssicherheit, besonders bei höheren Temperaturen, indem das Auftreten von unerwünschten Monomeren bzw. Abbauprodukten zurückgedrängt wird.

Für die Abfüllung von karbonisierten Flüssigkeiten erscheint es zukünftig erforderlich, daß das Dichtungselement eine Sicherheitsventil-Funktion ausübt, d.h. bei einem bestimmten Überdruck ein Entweichen des Gases gestattet um ein Platzen des Gefäßes zu vermeiden. Dies wird durch die plastischen Eigenschaften PE-haltiger Compounds ermöglicht.

Im folgenden wird die Erfindung anhand eines Ausführungsbeispieles weiter verdeutlicht, welches eine Inneneinlage für einen Kronenkork betrifft.

Hierfür wird zunächst durch Vermischen von Styrol-Butadien-Styrol-Kautschuk (SBS-Kautschuk) mit einem im wesentlichen paraffinischen Weißöl gemäß DAB 8 und Zuschlägen von Polyethylen (PE), Ethylen-Vinylacetat-Copolymerem (EVA)sowie ggf. Vinylacetat-Ethylen-Copolymerem (VAE) und/oder Polystyrol ein Polymercompound hergestellt. Dabei bildet der SBS-Kautschuk, der für sich eine Shore A-Härte von zwischen 40 und 90 aufweist, den Hauptbestandteil. Der Gehalt an den anderen Polymeren übersteigt 50 Gew.-% des gesamten Polymercompounds nicht und liegt für übliche Kronenkorke niedriger, jedoch vorzugsweise nicht unterhalb von 5 Gew.-%.

Neben diesen Bestandteilen werden dem Polymercompound noch 0,1 % Azodicarbonamid und bis zu 1 Gew.-% hochdisperses SiO₂ zugesetzt.

Das so erzeugte Polymercompound wird einer bekannten Maschine zugeführt, wie sie auch zum innenseitigen Beschichten von z. B. Kronenkork-Kapseln mit PVC-haltigen Polymermaterialien dient.

In dieser Maschine gelangt das Polymercompound zunächst in einen Extruder, in dem es unter durchgreifendem Kneten weiter homogenisiert wird. Es verläßt die Austrittsöffnung des Extruders als plastischer Strang, der sogleich hinter der Austrittsöffnung in einzelne Klümpchen zerschnitten wird.

Diese Klümpchen, die jeweils etwa 150 bis 170 mg wiegen, werden jeweils auf die Innenfläche einer metallenen Kapsel überführt, die den Körper des Kronenkorks bildet. Durch einen Formstempel wird die noch plastische Polymermasse auf dieser gegebenenfalls haftungsfördernd vorbehandelten, Innenfläche verteilt und zu einem dünnen, etwa kreisscheibenartigen Dichtungselement ausgeprägt. Dabei können die gegebenenfalls gewünschten Ringvorsprünge des Dichtungselementes ausgebildet werden, die bei aufgesetztem Kronenkork den Flaschenrand im Mündungsbereich umgreifen.

Nach dem Abkühlen und Erstarren des thermoplastischen Polymercompounds ist das die Inneneinlage des Kronenkorkes bildende Dichtungselement unter normalen Verwendungsbedingungen nicht mehr plastisch verformbar, kann sich aber elastisch dichtend an den Flaschenrand anlegen, wenn der Kronenkork auf die Flasche aufgepreßt wird. Aufgrund seiner Elastizität kann das Dichtungselement dabei Unebenheiten (beispielsweise durch Beschädigungen) und auch die durch Fertigungstoleranzen bedingte Rauheit des Flaschenrandes ausgleichen.

Das Polymercompound des Dichtungselement es kann durch geeignete Wahl der zur Härtemodifikation zugesetzten Bestandteile so ausgebildet werden, daß es auch der erhöhten Temperatur standhält, die bei einer Flaschenpasteurisation auftritt.

Der so erzeugte Kronenkork ist nach Erstarren des Polymercompounds gebrauchsfertig und kann bis zu seiner Verwendung gelagert werden; die Eigenschaften des Dichtungselementes, welches seine Inneneinlage bildet, ändern sich auch über längere Zeiträume nicht.

Es versteht sich, daß außer der hier dargestellten Verwendung im Zusammenhang mit Kronenkorken auch andere Dichtungselemente für Gefäßverschlüsse erzeugt werden können, bei denen das entsprechende Dichtungselement mit dem Verschlußkörper nicht fest verbunden ist.

## Patentansprüche

1. Dichtungselement für mechanisch dichtende Flaschen- und Gläserverschlüsse aus Metall oder Kunststoff, bestehend aus einem unter üblichen Verwendungsbedingungen elastisch verformbaren synthetischen halogenfreien Polymercompound, mit einem Gehalt an Styrol-Butadien-Styrol-Kautschuk (SBS-Kautschuk) mit einer Shore A-Härte von zwischen 40 und 90, einem Gehalt an einem estergruppenfreien Härtemodifikator und einem Gehalt an aliphatischen Polymer,
**dadurch gekennzeichnet,**
daß die Shore A-Härte des Polymercompounds zwischen 30 und 80 liegt und das Dichtungselement unmittelbar aus dem plastifizierten Polymercompound durch Druckverformung und nachfolgendes Erstarren erzeugbar ist.

2. Dichtungselement nach Anspruch 1,
**dadurch gekennzeichnet,**
daß der Härtemodifikator eine Mineralölfraktion, vorzugsweise ein raffiniertes, im wesentlichen paraffinisches Weißöl gemäß DAB 8 ist.

3. Dichtungselement nach Anspruch 1 oder 2,
**dadurch gekennzeichnet,**
daß der Gehalt an nicht aus SBS bestehenden Polymersubstanzen, insbesondere Polyethylen und/oder Ethylen-Vinylacetat-Copolymerem, 50 Gew.-% des Polymercompounds nicht übersteigt und vorzugsweise 5 Gew.-% nicht unterschreitet.

4. Dichtungselement nach einem der Ansprüche 1 bis 3,
**dadurch gekennzeichnet,**
daß das Polymercompound geschäumt ist.

5. Dichtungselement nach einem der Ansprüche 1 bis 4,
**dadurch gekennzeichnet,**
daß das Polymercompound Siliziumdioxid SiO₂ enthält.

6. Dichtungselement nach Anspruch 5,
**dadurch gekennzeichnet,**
daß der SiO₂-Gehalt höchstens 5 Gew.-% und vorzugsweise weniger als 1 Gew.-%, bezogen auf das Polymercompound insgesamt, ausmacht.

7. Dichtungselement nach einem der Ansprüche 1 bis 6,
**dadurch gekennzeichnet,**
daß seine Shore A-Härte zwischen 40 und 70 liegt.

8. Dichtungselement nach einem der Ansprüche 1 bis 7,
**dadurch gekennzeichnet,**
daß es als im wesentlichen kreisscheibenförmige Inneneinlage eines Kronenkorkens bzw. Flaschenschraubverschlusses ausgebildet ist und zwischen 150 mg und 250 mg, vorzugsweise weniger als 200 mg wiegt.

## Claims

1. Sealing element for mechanically sealing bottle and jar closures made of metal or plastics, consisting of a synthetic, halogen-free polymer compound elastically deformable in normal conditions of use, having a styrene-butadiene-styrene rubber (SBS rubber) content of a Shore A hardness of between 40 and 90, a content of a hardness modifier which is free of ester groups, and an aliphatic polymer content,
**characterized in**
that the Shore A hardness of the polymer compound is between 30 and 80, and the sealing element can be produced directly from the plastified polymer compound by compression moulding and subsequent solidifying.

2. Sealing element according to claim 1,
**characterized in**
that the hardness modifier is a mineral oil fraction, preferably a refined, essentially paraffinic white oil according to DAB 8.

3. Sealing element according to claim 1 or 2,
**characterized in**
that the content of polymer substances not consisting of SBS, in particular polyethylene and/or ethylene-vinyl acetate copolymer, does not exceed 50 wt-% of the polymer compound and preferably is not lower than 5 wt-%.

4. Sealing element according one of claims 1 through 3,
**characterized in**
that the polymer compound is foamed.

5. Sealing element according to one of claims 1 through 4,
**characterized in**
that the polymer compound contains silicon dioxide SiO₂.

6. Sealing element according to claim 5,
**characterized in**
that the SiO₂ content is maximally 5 wt-%, and preferably less than 1 wt-%, based on the total polymer compound.

7. Sealing element according to one of claims 1 through 6,
**characterized in**
that its Shore A hardness is between 40 and 70.

8. Sealing element according to one of claims 1 through 7,
**characterized in**
that it is provided in the form of an essentially circular internal insert of a crown cork or a bottle screw cap, weighing between 150 mg and 250 mg, preferably less than 200 mg.

## Revendications

1. Elément d'étanchéité pour fermetures à base de métal ou de matière plastique pour bouteilles et récipients en verre, à étanchéité mécanique, constitué d'une composition de polymère synthétique exempte d'halogène, susceptible de déformation élastique dans les conditions habituelles d'utilisation, présentant une teneur en caoutchouc styrène-butadiène-styrène (caoutchouc SBS) ayant une dureté Shore A comprise entre 40 et 90, une teneur en un modificateur de dureté exempt de groupes ester et une teneur en polymère aliphatique, caractérisé en ce que la dureté Shore A de la composition de polymère est comprise entre 30 et 80 et l'élément d'étanchéité peut être obtenu directement à partir de la composition de polymère plastifiée, par mise en forme sous pression et solidification subséquente.

2. Elément d'étanchéité selon la revendication 1, caractérisé en ce que le modificateur de dureté est une fraction d'huile minérale, de préférence une huile blanche raffinée essentiellement paraffinique selon DAB 8.

3. Elément d'étanchéité selon la revendication 1 ou 2, caractérisé en ce que la teneur en substances polymères non constituées de SBS, en particulier en polyéthylène et/ou copolymère éthylène/acétate de vinyle, n'excède pas 50 % en poids de la composition de polymère et de préférence n'est pas inférieure à 5 % en poids.

4. Elément d'étanchéité selon l'une des revendications 1 à 3, caractérisé en ce que la composition de polymère est expansée.

5. Elément d'étanchéité selon l'une des revendications 1 à 3, caractérisé en ce que la composition de polymère contient de la silice SiO₂.

6. Elément d'étanchéité selon la revendication 5, caractérisé en ce que la teneur en SiO₂ représente au maximum 5 % en poids et de préférence moins de 1 % en poids, par rapport à la composition totale de polymère.

7. Elément d'étanchéité selon l'une des revendications 1 à 6, caractérisé en ce que sa dureté Shore A est comprise entre 40 et 70.

8. Elément d'étanchéité selon l'une des revendications 1 à 7, caractérisé en ce qu'il est sous forme de garniture intérieure, en forme de disque pratiquement circulaire, d'un bouchon-couronne ou d'un bouchon à vis pour bouteille et pèse entre 150 et 250 mg, de préférence moins de 200 mg.
